(19) **Europäisches Patentamt European Patent Office Office européen des brevets**

(11) **EP 3 495 418 B1**

(12) **EUROPEAN PATENT SPECIFICATION**

(45) Date of publication and mention of the grant of the patent:
**11.12.2024 Bulletin 2024/50**

(21) Application number: **17836834.6**

(22) Date of filing: **26.07.2017**

(51) International Patent Classification (IPC):
**C08L 21/00** (2006.01)  **B60C 1/00** (2006.01)
**C08J 9/06** (2006.01)  **C08K 3/04** (2006.01)
**C08K 7/02** (2006.01)  **C08K 9/00** (2006.01)
**C08L 7/00** (2006.01)  **C08L 9/00** (2006.01)
**C08J 9/40** (2006.01)  **C08J 9/36** (2006.01)

(52) Cooperative Patent Classification (CPC):
(C-Sets available)
**B60C 1/0016; C08J 9/06; C08J 9/365; C08J 9/40; C08K 3/04; C08K 7/02; C08K 9/00; C08L 7/00; C08L 9/00;** C08J 2201/026; C08J 2207/00; C08J 2300/26; C08J 2307/02; C08J 2309/00; C08J 2309/02;       (Cont.)

(86) International application number:
**PCT/JP2017/027114**

(87) International publication number:
**WO 2018/025728 (08.02.2018 Gazette 2018/06)**

(54) **RUBBER MEMBER AND TIRE**

KAUTSCHUKELEMENT UND REIFEN

ÉLÉMENT EN CAOUTCHOUC ET PNEU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.08.2016 JP 2016152229**

(43) Date of publication of application:
**12.06.2019 Bulletin 2019/24**

(73) Proprietor: **Bridgestone Corporation Tokyo 104-8340 (JP)**

(72) Inventors:
• **SHIONO Saaya Tokyo 104-8340 (JP)**
• **TODA Takumi Tokyo 104-8340 (JP)**
• **HASHIGUCHI Makoto Tokyo 104-8340 (JP)**

(74) Representative: **Marks & Clerk LLP 15 Fetter Lane London EC4A 1BW (GB)**

(56) References cited:
WO-A1-2006/062119   WO-A1-97/34776
WO-A1-97/34776   JP-A- 2008 260 889
JP-A- 2008 260 889   JP-A- 2012 087 273
JP-A- 2012 087 273   JP-A- 2012 111 799
JP-A- 2012 111 799   JP-A- 2013 241 566
JP-A- 2013 241 566   JP-A- 2015 174 952
JP-A- 2015 174 952   JP-A- 2016 040 362
JP-A- 2016 040 362   JP-B1- 5 940 192
JP-B1- 5 940 192   KR-A- 20120 059 115

(52) Cooperative Patent Classification (CPC): (Cont.)
C08J 2309/06; C08J 2311/00; C08J 2323/16

C-Sets
**C08L 7/00, C08L 9/00, C08K 3/04, C08K 3/04,
C08K 3/36, C08K 3/06;
C08L 9/00, C08L 7/00, C08K 3/04, C08K 3/04,
C08K 3/36, C08K 3/06**

**Description**

TECHNICAL FIELD

The present disclosure relates to a rubber member and a tire.

BACKGROUND

Since studded tires were prohibited, various studies for improving the braking performance and the driving performance of tires on icy and snowy roads have been conducted. For example, JP 2014-227487 A (PTL 1) proposes improvement in performance such as on-ice performance required of studless tires while enhancing reinforcement by using: a modified natural rubber that is highly purified by removing non-rubber components and has a rubber component whose pH is adjusted to a predetermined range by treatment with an acidic compound and the like; and a filler such as carbon black.

PTL 2 relates to a rubber composition for a tread and a pneumatic tire using the same for a tread.

PTL 3 relates to a rubber composition for a tire tread and a tire produced using the rubber composition.

KR 2012-0059115 A discloses a tire tread rubber composition which has good grip and braking performances on wet surfaces, and which contains diamond nanoparticles having amino groups.

CITATION LIST

Patent Literature

PTL 1: JP 2014-227487 A
PTL 2: JP 2013-241566 A
PTL 3: KR 2012 0059115 A

SUMMARY

(Technical Problem)

However, the conventional technique mentioned above is intended to suppress a decrease in molecular weight during storage by adjusting the pH of the rubber component, and thus is limited in fundamentally improving the on-ice performance of tires.

It could therefore be helpful to provide a rubber member that can, when used in a rubber article such as a tire, improve the on-ice performance of the rubber article. It could also be helpful to provide a tire with improved on-ice performance.

(Solution to Problem)

A rubber member according to the present disclosure is a rubber member comprising a nanomaterial, wherein the nanomaterial has a major axis of less than 100 nm in the case of being non-fibrous or a minor axis length of less than 100 nm and a major axis length of less than 1000 nm in the case of being fibrous, and has a content of a polar group of 750 mg/kg or more and 3000 mg/kg or less,

the polar group includes an amino group,
the nanomaterial is diamond modified with the polar group
a plurality of minute recesses are formed on a surface of the rubber member wherein their maximum depth is 1 $\mu$m to 500 $\mu$m, and their longest diameter in a developed view of the surface of the rubber member is 1 $\mu$m to 500 $\mu$m, and
the nanomaterial is provided on an inner surface of one or more minute recesses of the plurality of minute recesses,
a plurality of minute cavities are formed inside the rubber member, and
the nanomaterial is provided on an inner surface of one or more minute cavities of the plurality of minute cavities.

A tire according to the present disclosure is a tire comprising a tread including the rubber member described above.

(Advantageous Effect)

It is thus possible to provide a rubber member that can, when used in a rubber article such as a tire, improve the on-ice performance of the rubber article. It is also possible to provide a tire with improved on-ice performance.

BRIEF DESCRIPTION OF THE DRAWINGS

In the accompanying drawings:

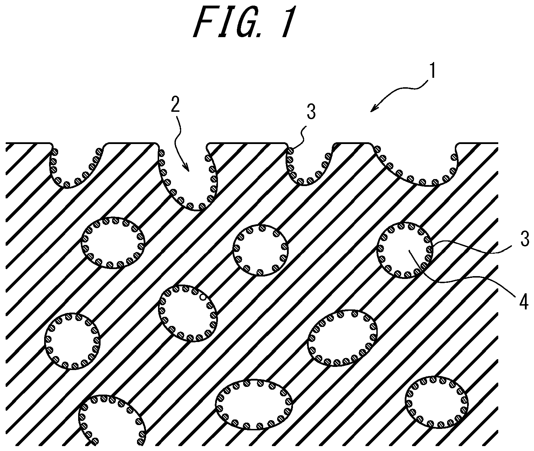

FIG. 1 is a schematic sectional view illustrating the surface and inside of a rubber member according to one of the disclosed embodiments.

DETAILED DESCRIPTION

(Rubber member)

A rubber member according to one of the disclosed embodiments includes a nanomaterial. The nanomaterial either has a major axis of less than 100 nm or has a minor axis length of less than 100 nm and a major axis length of less than 1000 nm, and has a polar group content of 750 mg/kg or more. The rubber member according to one of the disclosed embodiments can be produced using a rubber composition containing a rubber component, the nanomaterial, and other optional components.

Typically, for example when a vehicle is running on an icy and snowy road, a water film forms due to, for example, frictional heat between the icy and snowy road and the tire. This water film decreases the coefficient of friction between the tire and the icy and snowy road, and degrades the on-ice performance. In view of this, the rubber member according to one of the disclosed embodiments includes a nanomaterial that either has a major axis of less than 100 nm or has a minor axis length of less than 100 nm and a major axis length of less than 1000 nm. Hence, the surface roughness of the rubber member increases substantially, and also the nanomaterial increases the viscosity of the water film, as a result of which a decrease in the coefficient of friction (coefficient of static friction and coefficient of dynamic friction) is suppressed. This improves the on-ice performance of the tire. Moreover, the nanomaterial has a polar group content of 750 mg/kg or more, and thus has strong interaction with the rubber component. Its effect of increasing the viscosity of the water film, i.e. its effect of improving the on-ice performance, is therefore very high.

The rubber member according to the present disclosure also has a scratching effect by the nanomaterial that can come into contact with the icy and snowy road, in addition to the advantageous effects described above.

<Nanomaterial>

The nanomaterial used in the present disclosure needs to have a major axis of less than 100 nm in the case of being in a form (non-fibrous) other than fibrous or have a minor axis length of less than 100 nm and a major axis length of less than 1000 nm in the case of being fibrous. If the major axis is 100 nm or more in the case where the nanomaterial is in a form other than fibrous, the rubber member does not have sufficiently high surface roughness, and cannot improve the on-ice performance of the rubber article such as a tire. Likewise, if the minor axis length is 100 nm or more or the major axis length is 1000 nm or more in the case where the nanomaterial is fibrous, the rubber member does not have sufficiently high surface roughness, and cannot improve the on-ice performance of the rubber article such as a tire. In terms of effectively improving the on-ice performance and in terms of availability, in the case where the nanomaterial is in a form other than fibrous, the major axis of the nanomaterial is preferably 1 nm to 80 nm, and more preferably 10 nm to 60 nm. In terms of effectively improving the on-ice performance and in terms of availability, in the case where the nanomaterial is fibrous, the minor axis length of the nanomaterial is preferably 1 nm or more and less than 100 nm and more preferably 1 nm to 50 nm, and the major axis length of the nanomaterial is preferably 1 nm or more and less than 1000 nm and more preferably 300 nm to 800 nm.

The rubber member according to one of the disclosed embodiments may include a material having a major axis of 100 nm or more or a material not satisfying the condition that the minor axis length is less than 100 nm and the major axis length is less than 1000 nm. In terms of effectively improving the on-ice performance, however, the rubber member according to one of the disclosed embodiments preferably does not include any of a material having a major axis of 100 nm or more and a fine material not satisfying the condition that the minor axis length is less than 100 nm and the major axis length is less than 1000 nm.

Herein, the "major axis" of the nanomaterial denotes the length of the longest straight line connecting any two points on the outer surface of the nanomaterial. The "major axis", "minor axis length", and "major axis length" of the nanomaterial can be measured, for example, by photographing the nanomaterial using an electron microscope.

Herein, "fibrous" denotes a form in which the aspect ratio measured by photographing using an electron microscope is more than 1, and "non-fibrous" denotes a form other than fibrous.

The form of the nanomaterial used in the present disclosure is not limited as long as it has a major axis of less than 100 nm or has a minor axis length of less than 100 nm and a major axis length of less than 1000 nm, and may be selected as appropriate depending on the purpose. Examples include particulate, fibrous, laminae, and tetrapod.

The nanomaterial used in the present disclosure has a polar group content of 750 mg/kg or more and 3000 mg/kg or less. If the polar group content in the nanomaterial is less than 100 mg/kg, the interaction with the rubber component is insufficient, and the effect of increasing the viscosity of the water film, i.e. the effect of improving the on-ice performance, is insufficient. In terms of further improving the on-ice performance, the polar group content in the nanomaterial used in the present disclosure is 750 mg/kg or more.

The polar group content in the nanomaterial can be calculated by, for example, Kjeldahl method.

Examples of the polar group in the nanomaterial used in the present disclosure include amino group ($-NH_2$), carboxyl group (-COOH), hydroxyl group (-OH), nitro group ($-NO_2$), hydrogen group (-H), cyano group (-CN), and mercapto group (-SH). These polar groups may be used singly or in combination of two or more.

Of these, the polar group in the nanomaterial includes an amino group. Amino group can further increase the viscosity of the water film and further improve the on-ice performance, probably because of the influence of the network between the polar groups and strong interaction with the rubber component.

The nanomaterial used in the present disclosure may be made of any of an organic material and an inorganic material.

The inorganic material is not limited, and may be selected as appropriate depending on the purpose. Examples include inorganic materials such as diamond, silica, glass, gypsum, calcite, fluorite, orthoclase, aluminum hydroxide, alumina, silver, iron, titanium dioxide, cerium oxide, zinc oxide, carbon black, single-walled carbon nanotubes, multi-walled carbon nanotubes, and clay. These inorganic materials may be used singly or in combination of two or more.

The organic material is not limited, and may be selected as appropriate depending on the purpose. Examples include organic materials such as cellulose, aramid, nylon, and polymethyl methacrylate. These organic materials may be used singly or in combination of two or more.

In the case of using such an inorganic material or organic material as the nanomaterial in the present disclosure, the material can be treated by any method according to need so that the polar group content is 100 mg/kg or more.

Of these, the nanomaterial used in the present disclosure is diamond, specifically diamond modified with polar group, in terms of high specific surface area and in terms of interaction between the nanomaterials / interaction between water and the nanomaterial / interaction between the nanomaterial and the rubber.

The content of the nanomaterial in the rubber member according to the present disclosure is not limited, but is preferably more than 7 parts by mass and 250 parts by mass or less with respect to 100 parts by mass of the rubber component. As a result of the content of the nanomaterial being more than 7 parts by mass with respect to 100 parts by mass of the rubber component, the effect of increasing the viscosity of water, i.e. the effect of improving the on-ice performance, is sufficient. As a result of the content of the nanomaterial being 250 parts by mass or less with respect to 100 parts by mass of the rubber component, sufficient elastomer property and mechanical strength of the rubber member can be ensured. From the same point of view, the content of the nanomaterial is more preferably 10 parts by mass or more and more preferably 200 parts by mass or less, with respect to 100 parts by mass of the rubber component.

<Rubber component>

The rubber component is not limited, and may be selected as appropriate depending on the purpose. For example, natural rubber (NR) alone, diene-based synthetic rubber alone, or a combination of natural rubber and diene-based synthetic rubber may be used. The diene-based synthetic rubber is not limited, and may be selected as appropriate depending on the purpose. Examples of the diene-based synthetic rubber include butadiene rubber (BR), styrene-butadiene rubber (SBR), isoprene rubber (IR), chloroprene rubber (CR), ethylene-propylene-diene rubber (EPDM), acrylonitrile-butadiene rubber (NBR), and butyl rubber (IIR). These diene-based synthetic rubbers may be used singly or in combination of two or more.

<Surface/inside structure of rubber member>

The rubber member according to one of the disclosed embodiments is not limited as long as it includes (has) a rubber component and the above-described nanomaterial, and its surface/inside structure may be selected as appropriate depending on the purpose.

However, a rubber member 1 according to one of the disclosed embodiments preferably has a surface structure in which a plurality of minute recesses 2 are formed on the surface and a nanomaterial 3 as described above is provided on the inner surface of each of the minute recesses 2, as illustrated in FIG. 1. As a result of the plurality of minute recesses being formed on the surface of the rubber member, these minute recesses function as drainage channels, so that the water film can be removed to further suppress a decrease in the coefficient of friction between the rubber article such as a tire and the icy and snowy road. As a result of the nanomaterial being provided on the inner surfaces of these minute recesses, the surface roughness of the rubber member increases substantially, and also the nanomaterial apparently disperses in water that has entered into the minute recesses to thus increase the viscosity of the water, as a result of which a decrease in the coefficient of friction (coefficient of static friction and coefficient of dynamic friction) can be further suppressed. This further improves the on-ice performance of the rubber article such as a tire.

Herein, the "minute recess" denotes a concavity portion on the surface of the rubber member. Its maximum depth is 1 $\mu$m to 500 $\mu$m, and its longest diameter in a developed view of the surface of the rubber member is 1 $\mu$m to 500 $\mu$m. Thus, the minute recesses include recesses of various outer shapes. Whether or not minute recesses are present can be determined, for example, from a photograph of the surface of the rubber member taken using an electron microscope.

The rubber member 1 according to one of the disclosed embodiments also preferably has an inside structure in which a plurality of minute cavities 4 are formed inside and the nanomaterial 3 is provided on the inner surfaces of the minute cavities 4, as illustrated in FIG. 1. With such a configuration of the rubber member, even in the case where the surface wears due to long-term use, the minute cavities on the inside appear on the surface and the minute cavities appearing on the surface and the nanomaterial provided on their inner surfaces function as drainage channels, and substantially enhance the surface roughness of the rubber member and increase the viscosity of entered water to suppress a decrease in the coefficient of friction. The rubber member according to one of the disclosed embodiments having the above-described inside structure thus imparts high on-ice performance to the tire or the like over the long term. Although the rubber member has the plurality of minute cavities together with the plurality of minute recesses in FIG. 1, the rubber member may have the plurality of minute cavities without the plurality of minute recesses.

The size of each minute cavity is not limited, but the length of the longest straight line connecting any two points on the inner surface is preferably 1 $\mu$m to 10 mm. In the case where the rubber member according to the present disclosure has the above-described surface structure and inside structure, the minute recesses and the minute cavities may communicate with each other.

<Method for producing rubber member>

The rubber member according to one of the disclosed embodiments can be produced using a rubber composition containing a rubber component and other optional components as described above.

For example, the rubber member according to one of the disclosed embodiments can be produced by a method (hereafter also referred to as "method (1)") including: a step of blending a rubber component with at least a foaming agent to prepare a rubber composition (rubber composition preparation A step); a step of vulcanizing the prepared rubber composition and scraping off the outer surface of the resultant vulcanized rubber (vulcanization A step); and a step of providing a nanomaterial in minute recesses on the surface of the vulcanized rubber (nanomaterial provision step). With the method (1), the rubber member having the preferable surface structure described above can be obtained.

- Rubber composition preparation A step -

The rubber composition preparation A step is a step of blending a rubber component with a foaming agent and other optional components and kneading them to obtain a rubber composition. Specific examples of the rubber component are the same as those described above. By adding the foaming agent, a plurality of minute recesses can be formed on the surface of the rubber member, and also a plurality of minute cavities can be easily formed inside the rubber member.

Examples of the foaming agent include dinitrosopentamethylenetetramine (DPT), azodicarbonamide (ADCA), dinitrosopentastyrenetetramine, benzenesulfonylhydrazide derivatives, p,p'-oxybisbenzenesulfonylhydrazide (OBSH), ammonium bicarbonate, sodium bicarbonate, ammonium carbonate, nitrososulfonylazo compounds, N,N'-dimethyl-N,N'-dinitrosophthalamide, toluenesulfonylhydrazide, p-toluenesulfonylsemicarbazide, and p,p'-oxybisbenzenesulfonylsemicarbazide. Of these, azodicarbonamide (ADCA) and dinitrosopentamethylenetetramine (DPT) are preferable in terms of workability. These foaming agents may be used singly or in combination of two or more. The blending amount of the foaming agent is not limited, and may be selected as appropriate depending on the purpose. The blending amount of the foaming agent is preferably in a range of 1 part to 10 parts by mass with respect to 100 parts by mass of the rubber component.

In the rubber composition preparation A step, a foaming aid is preferably used together with the foaming agent. Examples of the foaming aid include urea, stearic acid, zinc stearate, zinc benzenesulfinate, and zinc oxide. These foaming aids may be used singly or in combination of two or more. By using the foaming aid together with the foaming agent, foam reaction can be promoted to enhance the degree of completion of the reaction, thus suppressing unwanted degradation over time.

In the rubber composition preparation A step, the rubber component may be blended with other optional components. Examples include vulcanizing agents such as sulfur, vulcanizing co-agents such as stearic acid, vulcanization accelerators such as dibenzothiazyl disulfide and N-cyclohexyl-2-benzothiazolesulfenamide, vulcanization acceleration aids such as zinc oxide, age resistors, colorants, antistatic agents, dispersants, lubricants, antioxidants, softeners, and fillers such as carbon black and silica. These may be used singly or in combination of two or more.

The components described above are kneaded according to a conventional method to prepare the rubber composition.

- Vulcanization A step -

The vulcanization A step is a step of vulcanizing the rubber composition prepared in the rubber composition preparation A step to obtain vulcanized rubber and scraping off the outer surface of the vulcanized rubber. In the vulcanization A step, the blended foaming agent foams and generates gas, and the gas causes a plurality of minute cavities to be formed inside the vulcanized rubber and a plurality of minute recesses to be formed on the surface of the vulcanized rubber. Moreover, by scraping off the outer surface of the vulcanized rubber, a surface on which a plurality of minute recesses deriving from minute cavities mentioned above are formed can be obtained more effectively. The method of scraping off the outer surface of the vulcanized rubber is not limited.

The vulcanization method is not limited, and may be selected as appropriate depending on the type of the rubber component and the like. In the case where the resultant rubber member is used in a tire tread, it is preferable to perform mold vulcanization. The vulcanization temperature is not limited, and may be selected as appropriate depending on the vulcanization time and the like. In terms of achieving desired rubber property and foaming ratio, the vulcanization temperature is preferably 100 °C to 200 °C. The vulcanization time is not limited, and may be selected as appropriate depending on the vulcanization temperature and the like. In terms of achieving desired rubber property and foaming ratio, the vulcanization time is preferably 3 min to 25 min.

The foaming ratio (Vs) of the vulcanized rubber is preferably 3 % to 40 %, and more preferably 5 % to 35 %. As a result of the foaming ratio being 3 % or more, a decrease in drainage performance caused by an excessively low volume of minute recesses and minute cavities capable of removing water on the icy and snowy road can be suppressed. As a result of the foaming ratio being 40 % or less, a decrease in tire durability caused by an excessively large number of minute recesses and minute cavities can be suppressed.

The foaming ratio (Vs) (%) can be calculated according to the following Formula (I):

$$Vs = (\rho_0/\rho_1 - 1) \times 100 \quad \dots (I)$$

[where $\rho_1$ is the density (g/cm$^3$) of the vulcanized rubber, and $\rho_0$ is the density (g/cm$^3$) of the solid phase portion in the vulcanized rubber].

- Nanomaterial provision step -

The nanomaterial provision step is a step of providing (subsequently) a nanomaterial in the minute recesses formed on the surface of the vulcanized rubber obtained in the vulcanization A step, to obtain the rubber member according to the present disclosure. Specific examples of the nanomaterial are the same as those described above.

The method of providing the nanomaterial is not limited, and may be selected as appropriate depending on the type of the nanomaterial used and the like. Examples of the method include a method of applying the nanomaterial manually or the like (application method), a method of spraying the nanomaterial together with gas using a tool such as an airbrush (spray method), and a method of impregnating the vulcanized rubber with a liquid obtained by dispersing the nanomaterial in a dispersion medium and then drying it (impregnation method).

Examples of the tool usable in the spray method include airbrush "METEO" produced by Airtex Corporation, and airbrush "74541" produced by Tamiya, Inc. Examples of the gas usable in the spray method include air, nitrogen, oxygen, and propane. Of these, propane is preferable in terms of achieving favorable adhesion.

The dispersion medium usable in the impregnation method is not limited as long as it can be removed by drying. Examples include water, methanol, ethanol, and isopropanol. Of these, ethanol and isopropanol are preferable in terms of ensuring fast drying and safety. The concentration of the nanomaterial in the liquid in the impregnation method is not limited, and may be selected as appropriate depending on the purpose. For example, the concentration of the nanomaterial is preferably 0.01 mass% to 1.0 mass%. The drying temperature in the impregnation method is not limited, and may be selected as appropriate depending on the boiling point of the dispersion medium used and the like. For example, the drying temperature is preferably 10 °C to 200 °C. The drying time in the impregnation method is not limited, and may be selected as appropriate depending on the concentration of the nanomaterial in the liquid and the like. For example, the drying time is preferably 10 min to 360 min.

As a method for producing a rubber member according to another one of the disclosed embodiments, a method combining the above-described method (1) and the below-described method (2), i.e. a method including the below-described fiber preparation step, rubber composition preparation B step, and vulcanization B step and the above-described nanomaterial provision step, may be used.

The rubber member according to one of the disclosed embodiments can also be produced by a method other than the above-described method (1), such as a method (hereafter also referred to as "method (2)") including: a step of preparing nanomaterial-containing organic fibers (fiber preparation step); a step of blending a rubber component with at least a foaming agent and the nanomaterial-containing organic fibers to prepare a rubber composition (rubber composition preparation B step); and a step of vulcanizing the prepared rubber composition and scraping off the outer surface of the resultant vulcanized rubber (vulcanization B step). With the method (2), the rubber member having the preferable surface structure and the preferable inside structure described above can be obtained.

- Fiber preparation step -

The fiber preparation step is a step of preparing nanomaterial-containing organic fibers. The nanomaterial-containing organic fibers are formulated in order to provide a nanomaterial on the inner surfaces of the minute recesses and minute cavities of the rubber member. The nanomaterial-containing organic fibers typically contain a resin and a nanomaterial. Specific examples of the nanomaterial are the same as those described above.

The melting point or softening point of the resin is preferably lower than the maximum temperature reached by the rubber composition during the vulcanization of the rubber composition, i.e. the maximum vulcanization temperature. In the case where the rubber composition containing the foaming agent contains the nanomaterial-containing organic fibers, the resin included in the nanomaterial-containing organic fibers melts or softens during the vulcanization, whereas gas generated from the foaming agent during the vulcanization in the rubber matrix tends to remain rather inside the melted or softened resin included in the fibers than in the rubber matrix for which vulcanization reaction has progressed. If the melting point or softening point of the resin is lower than the maximum vulcanization temperature, the resin melts or softens fast during the vulcanization of the rubber composition, with it being possible to form minute cavities efficiently.

Specific examples of such a resin include crystalline polymer resins, e.g. single composition polymers such as polyethylene (PE), polypropylene (PP), polybutylene, polybutylene succinate, polyethylene succinate, syndiotactic-1,2-polybutadiene (SPB), polyvinyl alcohol (PVA), and polyvinyl chloride (PVC), and polymers with a melting point controlled to an appropriate range by copolymerization, blending, or the like. These crystalline polymer resins may be used singly or in combination of two or more. Of these crystalline polymers, polyethylene (PE) and polypropylene (PP) are preferable in terms of versatility and availability, and polyethylene (PE) is more preferable in terms of having a relatively low melting point and being easy to handle. Meanwhile, in terms of attracting more water whose viscosity is to be increased by the nanomaterial, a hydroxyl group-containing resin such as polyvinyl alcohol is more preferable.

The melting point or softening point of the resin is preferably at least 10 °C lower than the maximum vulcanization temperature of the rubber composition, and more preferably at least 20 °C lower than the maximum vulcanization temperature of the rubber composition. A typical industrial vulcanization temperature of rubber compositions is about 190 °C at the maximum. For example, in the case where the maximum vulcanization temperature is set to 190 °C, the melting point or softening point of the resin is typically selected in a range of 190 °C or less, and is preferably 180 °C or less and more preferably 170 °C or less.

In the nanomaterial-containing organic fibers, the content of the nanomaterial is preferably 0.5 parts to 200 parts by mass with respect to 100 parts by mass of the resin. As a result of the content of the nanomaterial being 0.5 parts by mass or more, the resultant rubber member can considerably improve the on-ice performance of the tire or the like. As a result of the content of the nanomaterial being 200 parts by mass or less, high spinning efficiency can be maintained.

The average diameter of the nanomaterial-containing organic fibers is preferably 10 $\mu$m to 100 $\mu$m. As a result of the average diameter being 10 $\mu$m or more, spinning from the resin and the nanomaterial can be performed more reliably. As a result of the average diameter being 100 $\mu$m or less, an excessively high blending amount of the nanomaterial-containing organic fibers in the rubber composition can be avoided.

The average length of the nanomaterial-containing organic fibers is preferably 0.5 mm to 20 mm, and more preferably 1 mm to 10 mm. As a result of the average length being 0.5 mm or more, the minute recesses and the minute cavities can be formed more easily. As a result of the average length being 20 mm or less, sufficient kneading is possible without the hardness of the fibers being excessively high.

The preparation method for the nanomaterial-containing organic fibers is not limited, and may be selected as appropriate depending on the purpose. Examples include melt spinning, gel spinning, and solution spinning. For example, in the melt spinning, after heating and melting the resin as raw material in an extruder, the nanomaterial is dispersed, and then bundles of fibers extruded with a spinning nozzle are cooled by airflow to solidify while being extended in a spinning chimney. After this, oil is added to combine the fibers into one and wound. The nanomaterial-containing organic fibers can thus be prepared. In the solution spinning, the nanomaterial is dispersed in a polymer solution in which the resin as raw material is dissolved, and extruded with a spinning nozzle and subjected to desolvation and the like to be made fibrous. The nanomaterial-containing organic fibers can thus be prepared.

- Rubber composition preparation B step -

The rubber composition preparation B step is a step of blending a rubber component with a foaming agent, the nanomaterial-containing organic fibers prepared in the fiber preparation step, and other optional components and kneading them to obtain a rubber composition. Details of the rubber composition preparation B step are the same as those of the above-described rubber composition preparation A step, except the following points.

The blending amount of the nanomaterial-containing organic fibers in the rubber composition preparation B step is not limited, and may be selected as appropriate depending on the purpose. The blending amount of the nanomaterial-containing organic fibers is preferably 0.5 parts to 30 parts by mass with respect to 100 parts by mass of the rubber component. As a result of the blending amount of the nanomaterial-containing organic fibers being 0.5 parts by mass or more, the volume ratio of the minute recesses and the minute cavities in the vulcanized rubber can be increased, and a sufficient amount of the nanomaterial can be provided in the minute recesses and the minute cavities to efficiently improve the on-ice performance of the tire. As a result of the blending amount of the nanomaterial-containing organic fibers being 30 parts by mass or less, a decrease in the dispersibility of the nanomaterial-containing organic fibers in the rubber composition and the workability of the rubber composition can be suppressed.

- Vulcanization B step -

The vulcanization B step is a step of vulcanizing the rubber composition prepared in the rubber composition preparation B step to obtain vulcanized rubber and scraping off the outer surface of the vulcanized rubber to obtain the rubber member according to the present disclosure. In the vulcanization B step, as a result of vulcanization, the resin included in the nanomaterial-containing organic fibers melts, and the blended foaming agent foams and generates gas. The melted resin and the nanomaterial form a coating film so as to surround the gas, thus forming a plurality of minute cavities inside the vulcanized rubber. In addition, due to gas inflow from the foaming agent, the total amount of the nanomaterial included in the nanomaterial-containing organic fibers moves to the inner surface of the coating film, that is, the surface formed by the melted resin. The nanomaterial is thus provided (attached) on the inner surfaces of the minute cavities. By scraping off the outer surface of the vulcanized rubber, a surface on which a plurality of minute recesses deriving from minute cavities mentioned above are formed can be obtained. The method of scraping off the outer surface of the vulcanized rubber is not limited.

Details of the vulcanization B step are the same as those of the above-described vulcanization A step.

(Tire)

A tire according to the present disclosure includes a tread including the above-described rubber member. Such a tire has improved on-ice performance, because the above-described rubber member is used at least in the tread. The tire according to the present disclosure is therefore suitable for use as a studless tire and in particular a passenger vehicle studless tire. The tire according to the present disclosure is not limited as long as the above-described rubber member is used in the tread, and may be produced according to a conventional method.

EXAMPLES

The disclosed techniques will be described in more detail below using examples.

(Examples 1 to 18, Comparative Examples 1 and 2)

Each rubber composition was prepared according to a conventional method, with the formulation shown in Table 1. A tire tread (unvulcanized) was produced using the rubber composition, and placed in position to yield a raw tire. The raw tire was subjected to mold vulcanization at 165 °C for 20 min, to obtain a vulcanized tire.

The formulation selected in each example is shown in Table 4.

Table 1

|  |  | Formulation A | Formulation B |
|---|---|---|---|
| Natural rubber | Parts by mass | 50 | 50 |
| Butadiene rubber *1 | | 50 | 50 |
| Carbon black *2 | | 20 | 20 |
| Silica *3 | | 35 | 35 |
| Process oil | | 10 | 30 |
| Silane coupling agent | | 3.5 | 3.5 |
| Stearic acid | | 2 | 2 |
| Zinc oxide | | 3.5 | 3.5 |
| Age resistor *4 | | 1 | 1 |
| Vulcanization accelerator A *5 | | 0.8 | 0.8 |
| Vulcanization accelerator B *6 | | 1 | 1 |
| Sulfur | | 1 | 1 |
| Foaming agent *7 | | 2.5 | 0 |
| Foaming aid *8 | | 2.5 | 0 |

*1 produced by JSR Corporation, "BR01", cis-1,4-polybutadiene
*2 produced by Asahi Carbon Co., Ltd., "Carbon N220", agglomerates being 100 nm or more
*3 produced by Nippon Silica Industrial Co., Ltd., "Nipsil-VN3", agglomerates being 100 nm or more
*4 produced by Ouchi Shinko Chemical Industrial Co., Ltd., "NOCRAC 6C"
*5 dibenzothiazyl disulfide
*6 N-cyclohexyl-2-benzothiazolesulfenamide
*7 dinitrosopentamethylenetetramine
*8 urea

The vulcanized tire was then mounted on a passenger vehicle, the passenger vehicle was run 50 km or more to level the surface, and the outer surface of the tire was uniformly scraped off by a predetermined thickness. In each example other than Comparative Examples 1 and 2, the nanomaterial shown in Table 2 was prepared, and provided on the inner surfaces of substantially all minute recesses on the ground contact target surface of the tread of the vulcanized tire by any of the methods shown in Table 3. A passenger vehicle radial tire of size 185/70R13 having a rubber member in its tread was thus produced.

The nanomaterial and the method of providing the nanomaterial selected in each example are shown in Table 4. The content of the nanomaterial with respect to 100 parts by mass of the rubber component in the rubber member in each example is also shown in Table 4. The content can be calculated using the mass and composition of the rubber composition and the mass of the rubber member before and after the provision of the nanomaterial.

Table 2

|  | Nanomaterial A*10 | Nanomaterial B*11 | Nanomaterial C*12 | Nanomaterial D*13 | Nanomaterial E*14 | Nanomaterial F*15 |
|---|---|---|---|---|---|---|
| Material | Diamond | Diamond | Diamond | Diamond | Diamond | Cellulose |
| Form | Particulate | Particulate | Particulate | Particulate | Particulate | Fibrous |
| Major axis, or major axis length and minor axis length | Major axis 10 nm | Major axis 10 nm | Major axis 10 nm | Major axis 10 nm | Major axis 10 nm | Major axis length 600 nm Minor axis length 90 nm |

(continued)

|  | Nanomaterial A*10 | Nanomaterial B*11 | Nanomaterial C*12 | Nanomaterial D*13 | Nanomaterial E*14 | Nanomaterial F*15 |
|---|---|---|---|---|---|---|
| Polar group contained | -NH$_2$,-H,-OH, -NO$_2$ | -NH$_2$,-H,-OH, -NO$_2$ | -NH$_2$,-H,-OH, -NO$_2$ | Mainly -COOH | Mainly -H | -OH |
| Content of -NH$_2$ [mg/kg] | 250 | 780-850 | 2000 | 120 or less | 100 or less | - |
| Content of -OH [mg/kg] | 500 or less | 500 or less | 500 or less | 100 or less | 20 or less | 250 or more |
| Viscosity of aqueous dispersion [Pa·s]*16 | 9,500 | 11,000 | 13,000 | 11,060 | 6,900 | 10,000 |

* 10 produced by AR BROWN Co., Ltd., "uDiamond Molt Muevo"
* 11 produced by AR BROWN Co., Ltd., "uDiamond Amine"
* 12 produced by AR BROWN Co., Ltd., "uDiamond AmineP"
* 13 produced by AR BROWN Co., Ltd., "uDiamond VOXP"
* 14 produced by AR BROWN Co., Ltd., "uDiamond Hydrogen P"
* 15 produced by Daicel FineChem Ltd. cellulose nanofiber, "CELISH KY100-G"
* 16 viscosity of aqueous dispersion prepared with concentration of target nanomaterial being 23 mass%, at 25 °C and shearing velocity of 0.01/s measured by cone-plate viscometer (cone diameter: 60 mm, angle: 0.99°)

Table 3

| Method | Procedure |
|---|---|
| Application method | Nanomaterial is applied manually without using dispersion medium. |
| Spray method | Nanomaterial dispersed in propane is sprayed using airbrush ("METEO" produced by Airtex Corporation). |
| Impregnation method | Aqueous dispersion in which nanomaterial is dispersed (nanomaterial concentration: 0.5mass%) is prepared, and vulcanized rubber is impregnated with aqueous dispersion, and then dried at 60°C for 240 min to remove water. |

For each obtained tire, the foaming ratio (Vs) (%) of the vulcanized rubber forming the tread was calculated according to the following Formula (I):

$$Vs = (\rho_0/\rho_1 - 1) \times 100 \quad ... \text{ (I)}$$

[where $\rho_1$ is the density (g/cm$^3$) of the vulcanized rubber, and $\rho_0$ is the density (g/cm$^3$) of the solid phase portion in the vulcanized rubber].

Consequently, the foaming ratio in Comparative Example 1 was 0 %, and the foaming ratio in all of the other examples was 25 %.

Moreover, for each obtained tire, the surface state and the inside state of the tread as the rubber member and the on-ice performance of the tire were evaluated by the following methods.

<Surface state and inside state of tread>

A rubber piece including the ground contact target surface was cut from the tread center portion of the obtained tire, and the surface and section of this sample were observed by a scanning electron microscope (SEM), to determine whether or not minute recesses were present on the ground contact target surface of the tread and whether or not minute cavities were present inside the tread. Consequently, neither minute recesses nor minute cavities were observed in Comparative Example 1, whereas a plurality of minute recesses and a plurality of minute cavities were observed in all examples other than Comparative Example 1.

<On-ice performance of tire>

A passenger vehicle having the obtained tire mounted thereon was run 200 km on an asphalt road, and then run on an icy flat road. When the speed was 20 km/h, the passenger vehicle was braked and the tire was locked, and the braking distance until the vehicle was stopped was measured. The result is represented by an index, with the inverse of the braking distance of the tire of Comparative Example 1 being set to 100. A higher index indicates better on-ice performance. The results are shown in Table 4.

Table 4

| Rubber member | Nanomaterial | | Comparative Example 1 | Comparative Example 2 | Example 1 | Example 2 | Example 3 | Reference Example 4 | Reference Example 5 | Reference Example 6 | Example 7 | Example 8 |
|---|---|---|---|---|---|---|---|---|---|---|---|---|
| | | Formulation of rubber composition | Formulation B | Formulation A | Formulation A | Formulation A | Formulation A | Formulation A | Formulation A | Formulation A | Formulation A | Formulation A |
| | | Type | - | - | Nanomaterial A | Nanomaterial B | Nanomaterial C | Nanomaterial D | Nanomaterial E | Nanomaterial F | Nanomaterial A | Nanomaterial B |
| | | Major axis, or major axis length and minor axis length | - | - | Major axis 10 nm | Major axis 10 nm | Major axis 10 nm | Major axis 10 nm | Major axis 10 nm | Major axis length 600 nm Minor axis length 90 nm | Major axis 10 nm | Major axis 10 nm |
| | | Polar group content [mg/kg] | - | - | 250 or more | 780 or more | 2000 or more | 100 or more and 220 or less | 100 or more and 120 or less | 250 or more | 250 or more | 780 or more |
| | | Provision method | - | - | Application | Application | Application | Application | Application | Application | Spray | Spray |
| | | Content with respect to 100 parts by mass of rubber component [parts by mass] | 0 | 0 | 20 | 20 | 20 | 20 | 20 | 20 | 20 | 20 |
| Tire | | On-ice performance | 100 | 200 | 300 | 320 | 340 | 280 | 285 | 290 | 300 | 320 |

| Rubber member | Nanomaterial | | Example 9 | Reference Example 10 | Reference Example 11 | Reference Example 12 | Example 13 | Example 14 | Example 15 | Reference Example 16 | Reference Example 17 | Reference Example 18 |
|---|---|---|---|---|---|---|---|---|---|---|---|---|
| | | Formulation of rubber composition | Formulation A | Formulation A | Formulation A | Formulation A | Formulation A | Formulation A | Formulation A | Formulation A | Formulation A | Formulation A |
| | | Type | Nanomaterial C | Nanomaterial D | Nanomaterial E | Nanomaterial F | Nanomaterial A | Nanomaterial B | Nanomaterial C | Nanomaterial D | Nanomaterial E | Nanomaterial F |
| | | Major axis, or major axis length and minor axis length | Major axis 10 nm | Major axis 10 nm | Major axis 10 nm | Major axis length 600 nm Minor axis length 90 nm | Major axis 10 nm | Major axis 10 nm | Major axis 10 nm | Major axis 10 nm | Major axis 10 nm | Major axis length 600 nm Minor axis length 90 nm |
| | | Polar group content [mg/kg] | 2000 or more | 100 or more and 220 or less | 100 or more and 120 or less | 250 or more | 250 or more | 780 or more | 2000 or more | 100 or more and 220 or less | 100 or more and 120 or less | 250 or more |
| | | Provision method | Spray | Spray | Spray | Spray | Impregnation | Impregnation | Impregnation | Impregnation | Impregnation | Impregnation |
| | | Content with respect to 100 parts by mass of rubber component [parts by mass] | 20 | 20 | 20 | 20 | 20 | 20 | 20 | 20 | 20 | 20 |
| Tire | | On-ice performance | 340 | 280 | 285 | 290 | 300 | 320 | 340 | 280 | 285 | 290 |

(Examples 19 to 24, Comparative Example 3)

First, polyvinyl alcohol (produced by Kuraray Co., Ltd., "KURALON K-11") as a resin and the nanomaterial shown in Table 2 were prepared.

The nanomaterial selected in each example is shown in Table 6.

The resin and 100 parts by mass of any of the nanomaterials A to F shown in Table 2 with respect to 100 parts by mass of the resin were blended, and fibers (nanomaterial-containing organic fibers) were prepared according to typical melt spinning. For the prepared fibers, 20 locations were randomly selected, and the diameters and the lengths were measured using an optical microscope and averaged. All fibers had an average diameter of 30 $\mu$m and an average length of 2 mm.

In Examples 19 to 24, using the fibers prepared as described above, kneading was performed according to a conventional method with the formulation shown in Table 5, to prepare a rubber composition in which the blended fibers were arranged in a predetermined direction. In Comparative Example 3, kneading was performed according to a conventional method with the same formulation as shown in Table 5 except not adding fibers, to prepare a rubber composition. A tire tread (unvulcanized) was then produced using the prepared rubber composition, and placed in position to yield a raw tire. The raw tire was subjected to mold vulcanization at 165 °C for 10 min, to obtain a vulcanized tire. The maximum vulcanization temperature of each rubber composition during vulcanization was 165 °C.

Table 5

| | | Formulation |
|---|---|---|
| Natural rubber | | 30 |
| Butadiene rubber *1 | | 70 |
| Fibers | | 5 |
| Carbon black *2 | | 20 |
| Silica *3 | | 35 |
| Process oil | Parts by mass | 10 |
| Stearic acid | | 2 |
| Zinc oxide | | 3.5 |
| Age resistor *4 | | 1 |
| Vulcanization accelerator A *5 | | 0.8 |
| Vulcanization accelerator B *6 | | 1 |
| Sulfur | | 1 |
| Foaming agent *7 | | 2.5 |
| Foaming aid *8 | | 2.5 |

The vulcanized tire was then mounted on a passenger vehicle, the passenger vehicle was run 50 km to level the surface, and the outer surface of the tire was uniformly scraped off by a predetermined thickness. A passenger vehicle radial tire of size 185/70R13 having a rubber member in its tread was thus produced.

The content of the nanomaterial with respect to 100 parts by mass of the rubber component in the rubber member in each example is also shown in Table 6. The content can be calculated using the mass of the fibers blended in the rubber composition and the composition of the rubber composition.

For the obtained tire, the foaming ratio (Vs) (%) of the vulcanized rubber forming the tread was calculated by the same method as above. Consequently, the foaming ratio was in a range of 25 % to 27 % in all of Examples 19 to 24 and Comparative Example 3.

For the obtained tire, whether or not minute recesses were present on the ground contact target surface of the tread and whether or not minute cavities were present inside the tread were observed by the same method as above. Consequently, a plurality of minute recesses and a plurality of minute cavities were observed in all tires. In the tires of Examples 19 to 24, the provision of the nanomaterial on the inner surfaces of the minute recesses and the minute cavities was observed.

Moreover, for the obtained tire, the on-ice performance was evaluated by the same method as above. The result is represented by an index, with the inverse of the braking distance of the tire of Comparative Example 3 being set to 100. The results are shown in Table 6.

EP 3 495 418 B1

Table 6

| Rubber member | Nanomaterial | Type | Comparative Example 3 | Example 19 | Example 20 | Example 21 | Reference Example 22 | Reference Example 23 | Reference Example 24 |
|---|---|---|---|---|---|---|---|---|---|
| | | Type | None | Nanomaterial A | Nanomaterial B | Nanomaterial C | Nanomaterial D | Nanomaterial E | Nanomaterial F |
| | | Major axis, or major axis length and minor axis length | | Major axis 10 nm | Major axis 10 nm | Major axis 10 nm | Major axis 10 nm | Major axis 10 nm | Major axis length 600 nm Minor axis length 30 nm |
| | | Polar group content [mg/kg] | | 250 or more | 780 or more | 2000 or more | 100 or more and 220 or less | 100 or more and 120 or less | 250 or more |
| | | Content with respect to 100 parts by mass of rubber component [parts by mass] | | 2.5 | 2.5 | 2.5 | 2.5 | 2.5 | 2.5 |
| Tire | | On-ice performance | 100 | 200 | 220 | 250 | 195 | 195 | 195 |

Tables 4 and 6 demonstrate that the rubber member of each Example having a major axis of less than 100 nm or a minor axis length of less than 100 nm and a major axis length of less than 1000 nm and having a polar group content of 100 mg/kg or more can, when used in a tread of a tire as an example of a rubber article, improve the on-ice performance of the tire.

INDUSTRIAL APPLICABILITY

It is thus possible to provide a rubber member that can, when used in a rubber article such as a tire, improve the on-ice performance of the rubber article. It is also possible to provide a tire with improved on-ice performance.

REFERENCE SIGNS LIST

1   rubber member
2   minute recess
3   nanomaterial
4   minute cavity

**Claims**

1.  A rubber member comprising

    a nanomaterial,
    wherein the nanomaterial has a major axis of less than 100 nm in the case of being non-fibrous or a minor axis length of less than 100 nm and a major axis length of less than 1000 nm in the case of being fibrous, and has a content of a polar group of 750 mg/kg or more and 3000 mg/kg or less,
    the polar group includes an amino group,
    the nanomaterial is diamond modified with the polar group,
    a plurality of minute recesses are formed on a surface of the rubber member, wherein their maximum depth is 1 $\mu$m to 500 $\mu$m, and their longest diameter in a developed view of the surface of the rubber member is 1 $\mu$m to 500 $\mu$m, and
    the nanomaterial is provided on an inner surface of one or more minute recesses of the plurality of minute recesses,
    a plurality of minute cavities are formed inside the rubber member, and
    the nanomaterial is provided on an inner surface of one or more minute cavities of the plurality of minute cavities.

2.  The rubber member according to claim 1, wherein a content of the nanomaterial is more than 7 parts by mass and 250 parts by mass or less with respect to 100 parts by mass of a rubber component.

3.  A tire comprising
    a tread including the rubber member according to claim 1 or 2.

**Patentansprüche**

1.  Gummielement, umfassend

    ein Nanomaterial,
    wobei das Nanomaterial eine Hauptachse von weniger als 100 nm aufweist, wenn es nicht faserig ist, oder eine Nebenachsenlänge von weniger als 100 nm und eine Hauptachsenlänge von weniger als 1000 nm, wenn es faserig ist, und einen Gehalt an einer polaren Gruppe von 750 mg/kg oder mehr und 3000 mg/kg oder weniger aufweist,
    die polare Gruppe eine Aminogruppe einschließt,
    das Nanomaterial mit der polaren Gruppe diamantmodifiziert ist,
    auf einer Oberfläche des Gummielements eine Vielzahl von winzigen Vertiefungen ausgebildet sind, wobei ihre maximale Tiefe 1 $\mu$m bis 500 $\mu$m beträgt und ihre längster Durchmesser in einer abgewickelten Ansicht der Oberfläche des Gummielements 1 μm bis 500 μm beträgt, und

das Nanomaterial auf einer Innenfläche einer oder mehrerer winziger Vertiefungen der Vielzahl von winzigen Vertiefungen bereitgestellt ist,

eine Vielzahl von winzigen Hohlräumen innerhalb des Gummielements gebildet sind, und

das Nanomaterial auf einer Innenfläche von einem oder mehreren winzigen Hohlräumen der Vielzahl von winzigen Hohlräumen bereitgestellt ist.

**2.** Gummielement nach Anspruch 1, wobei der Gehalt des Nanomaterials mehr als 7 Massenteile und 250 Massenteile oder weniger, bezogen auf 100 Massenteile einer Gummikomponente, beträgt.

**3.** Reifen, umfassend

eine Lauffläche, die das Gummielement nach Anspruch 1 oder 2 einschließt.

**Revendications**

**1.** Elément en caoutchouc comprenant :

un nanomatériau,

dans lequel le nanomatériau présente un axe principal de moins de 100 nm dans le cas où il n'est pas fibreux, ou une longueur axiale secondaire inférieure à 100 nm et une longueur axiale principale inférieure à 1000 nm dans le cas où il est fibreux, et présente une teneur en un groupe polaire de 750 mg/kg ou plus et de 3000 mg/kg ou moins,

le groupe polaire inclut un groupe amino,

le nanomatériau est modifié en diamant avec le groupe polaire,

une pluralité d'évidements minuscules sont formés sur une surface de l'élément en caoutchouc, dans lequel leur profondeur maximale est de 1 μm à 500 μm et leur plus long diamètre, dans une vue développée de la surface de l'élément en caoutchouc, est de 1 μm à 500 μm, et

le nanomatériau est fourni sur une surface intérieur d'un ou plusieurs évidements minuscules de la pluralité d'évidements minuscules,

une pluralité de cavités minuscules sont formés à l'intérieur de l'élément en caoutchouc, et

le nanomatériau est fourni sur une surface intérieur d'une ou plusieurs cavités minuscules de la pluralité de cavités minuscules.

**2.** Elément en caoutchouc selon la revendication 1, dans lequel une teneur en nanomatériau est de plus de 7 parties en masse et de 250 parties en masse ou moins, par rapport à 100 parties en masse d'un élément en caoutchouc.

**3.** Pneumatique comprenant :

une bande de roulement incluant l'élément en caoutchouc selon la revendication 1 ou la revendication 2.

# FIG. 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014227487 A
- KR 20120059115 A

- JP 2013241566 A